# EUROPEAN PATENT APPLICATION

(11) **EP 4 838 680 A1**
(43) Date of publication of application: **11.11.2026**
(21) Application number: 25861675.4
(22) Date of filing: 06.08.2025
(51) Int. Cl.: H01M 50/531

(54) **BATTERY AND BATTERY MODULE**

(30) Priority: 19.03.2025 CN 202520492828 U
(71) Applicant: HUIZHOU EVE POWER CO., LTD, Huizhou, Guangdong 516039 (CN)
(72) Inventor: PU, Xiaojun, Huizhou Guangdong 516039 (CN)
(74) Representative: Berggren Oy
(86) International application number: PCT/CN2025/112940
(87) International publication number: WO 2026/194140

(57) **Abstract**

The present application provides a battery and a battery module. The battery includes a housing and an electrical connector. A bottom wall of the housing is provided with a first through hole. The electrical connector is disposed within the housing and in contact with the housing. The electrical connector is provided with a second through hole. The second through hole is communicated with the first through hole to allow the electrolyte and/or gas to pass through. The electrical connector provided in the present application does not need to be bent, thereby avoiding misalignment between the second through hole and the first through hole.

## Description

This application claims priority to and the benefit of Chinese Patent Application No. 202520492828.7, filed with the China National Intellectual Property Administration on Mar. 19, 2025, the disclosure of which is incorporated herein by reference in its entirety.

### TECHNICAL FIELD

The present application relates to the field of battery technologies, and in particular, to a fixing bracket, a temperature sensor assembly, and a battery module.

### BACKGROUND

In the related art, the battery includes an electrical connector, a housing, and a cell. The electrical connector is disposed between the housing and the cell. To facilitate connection, the electrical connector typically requires secondary bending and the creation of a clearance hole corresponding to the gas passage of the explosion-proof valve. The secondary bending of the electrical connector may lead to misalignment between the clearance hole and the gas passage of the explosion-proof valve. During thermal runaway of the battery, the electrical connector may obstruct the gas passage, making it difficult for the explosion-proof valve to open and release pressure normally. Alternatively, aligning them may increase the complexity of the assembly process.

### SUMMARY

Embodiments of the present application provide a battery and a battery module, aiming to address a technical problem of gas passage blockage in the explosion-proof valve caused by misalignment due to secondary bending of the electrical connector in the related art.

In a first aspect, some embodiments of the present application provide a battery, including:
a housing, where a bottom wall of the housing is provided with a first through hole; and
an electrical connector disposed within the housing and being in contact with the housing, where the electrical connector is provided with a second through hole, and the second through hole is communicated with the first through hole to allow an electrolyte and/or a gas to pass through.

In a second aspect, some embodiments of the present application provide a battery module that includes a battery. The battery includes:
a housing, where a bottom wall of the housing is provided with a first through hole; and
an electrical connector disposed within the housing and being in contact with the housing, where the electrical connector is provided with a second through hole, and the second through hole is communicated with the first through hole to allow an electrolyte and/or a gas to pass through.

### BENEFICIAL EFFECTS

In the technical solution of the present application, the bottom wall of the housing is provided with a first through hole. The electrical connector is disposed within the housing and is in contact with the housing. The electrical connector is provided with a second through hole that is communicated with the first through hole. During battery assembly, the second through hole communicates with the first through hole, allowing electrolyte to enter the interior of the battery through the first through hole and the second through hole. After the battery is assembled, the first through hole and the second through hole can serve as vent holes to discharge gas from inside the battery, thereby preventing thermal runaway inside the battery. Additionally, the electrical connector does not require bending, eliminating the risk of misalignment between the second through hole and the first through hole. This addresses the technical problem in the related art where misalignment due to secondary bending of the electrical connector leads to blockage of the gas passage of explosion-proof valve.

### BRIEF DESCRIPTION OF THE DRAWINGS

FIG. 1 is a schematic perspective view of a battery according to some embodiments of the present application.
FIG. 2 is a schematic structural diagram of an electrical connector in FIG. 1.
FIG. 3 is a schematic structural diagram of a housing in FIG. 1.
FIG. 4 is a schematic structural diagram of an explosion-proof valve in FIG. 1.
FIG. 5 is schematic full cross-sectional view of FIG. 1.
FIG. 6 is an enlarged schematic view of portion A in FIG. 5.

### Description of reference numerals:

100, battery; 10, housing; 11, bottom wall; 111, first through hole; 112, accommodating groove; 20, electrical connector; 201, second through hole; 21, first connecting portion; 22, groove; 23, second connecting portion; 30, explosion-proof valve; 31, first explosion-proof portion; 32, second explosion-proof portion; 33, third explosion-proof portion; 34, score; 40, cover plate assembly; 50, cell.

### DETAILED DESCRIPTION

In the related art, the battery includes an electrical connector, a housing, and a cell. The electrical connector is disposed between the housing and the cell. To facilitate connection, the electrical connector typically requires secondary bending and the creation of a clearance hole corresponding to the gas passage of the explosion-proof valve. The secondary bending of the electrical connector may lead to misalignment between the clearance hole and the gas passage of the explosion-proof valve. During thermal runaway of the battery, the electrical connector may obstruct the gas passage, making it difficult for the explosion-proof valve to open and release pressure normally. Alternatively, aligning them may increase the complexity of the assembly process.

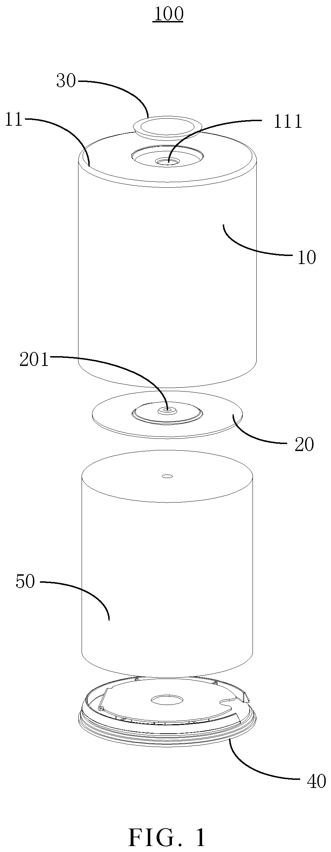

In view of this, the present application provides a battery 100. FIGs. 1 to 6 are schematic structural diagrams of the battery 100 according to an embodiment of the present application. The following will provide a detailed description of the battery 100 with reference to the drawings.

Referring to FIG. 1, FIG. 2, and FIG. 3, the present application provides a battery 100. The battery 100 includes a housing 10 and an electrical connector 20. A bottom wall 11 of the housing 10 is provided with a first through hole 111. The electrical connector 20 is disposed within the housing 10 and is in contact with the housing 10. The electrical connector 20 is provided with a second through hole 201. The second through hole 201 is communicated with the first through hole 111 to allow the electrolyte and/or gas to pass through.

In the technical solution of the present application, the bottom wall 11 of the housing 10 is provided with the first through hole 111. The electrical connector 20 is disposed within the housing 10 and is in contact with the housing 10. The electrical connector 20 is provided with the second through hole 201 that is communicated with the first through hole 111. During assembly of the battery 100, the second through hole 201 communicates with the first through hole 111, allowing the electrolyte to enter the interior of the battery 100 from the first through hole 111 and the second through hole 201. After the battery 100 is assembled, the first through hole 111 and the second through hole 201 can serve as vent holes to discharge gas from inside the battery 100, thereby preventing thermal runaway inside the battery 100. Additionally, the electrical connector 20 does not require bending, eliminating the risk of misalignment between the second through hole 201 and the first through hole 111. This addresses the technical problem in the related art where misalignment due to secondary bending of the electrical connector leads to blockage of the gas passage of the explosion-proof valve 30.

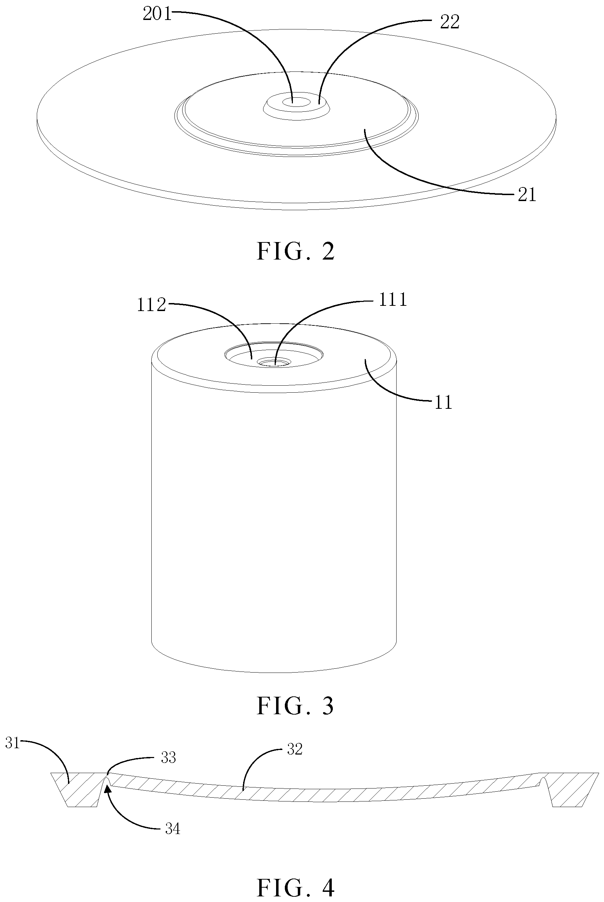

Referring to FIG. 1 and FIG. 2, the electrical connector 20 includes a first side surface and a second side surface that are opposite to each other. The first side surface is disposed close to the bottom wall 11 and is connected to the bottom wall 11 of the housing 10. The second side surface is connected to the cell 50. In this manner, the housing 10 serves as the output electrode, and the electrical connector 20 is used for electrically connecting the housing 10 and the cell 50.

In some embodiments, the electrical connector 20 is configured as a disc-shaped structure. The material of the electrical connector 20 may be steel, such as SPCC material, or stainless steel materials like SUS410, SUS306, SUS316, SUS430, SUS444, etc. When aluminum is used as the material, a coating layer can be applied to both surfaces of the electrical connector 20 to enhance its corrosion resistance, preventing corrosion by the electrolyte during injection. The thickness of the coating layer ranges from 0.3 µm to 8 µm, and the thicknesses of the two coating layers on both side surfaces can be the same or different. The manner in which the coating layer is provided can follow conventional practices in the art and will not be described in detail herein.

The method of connecting the electrical connector 20 to the cell 50 is not limited, as long as it can effectively transfer electrical energy. For example, the electrical connector 20 may be in direct contact with the cell 50; alternatively, the electrical connector 20 may be welded to the cell 50; and alternatively, the electrical connector 20 may be riveted to the cell 50. Specifically, in the embodiments of the present application, the electrical connector 20 is connected to the cell 50 by welding, using laser penetration welding to achieve a more stable connection. The specific welding method and steps for laser penetration welding can follow conventional practices in the art and will not be described in detail herein.

Please continue to refer to FIG. 1. The electrical connector 20 includes a first part and a second part that are connected to each other. The first part is disposed surrounding the second part. The first part is connected to the cell 50. The second part is connected to the housing 10. The cell 50 is provided with a via hole, which corresponds to the first through hole 111 and is configured to accommodate the electrolyte.

The method of connecting the electrical connector 20 to the housing 10 is not limited, as long as it can effectively transfer electrical energy. For example, the electrical connector 20 may be in direct contact with the housing 10; alternatively, the electrical connector 20 may be welded to the housing 10; and alternatively, and the electrical connector 20 may be riveted to the housing 10. Specifically, in the embodiments of the present application, the electrical connector 20 is connected to housing 10 by welding, using laser penetration welding to achieve a more stable connection. The specific welding method and steps for laser penetration welding can follow conventional practices in the art and will not be described in detail herein.

Referring to FIG. 3, the housing 10 includes the bottom wall 11 and a side wall. The side wall is disposed surrounding the bottom wall 11. An accommodating cavity is formed between the side wall and the bottom wall 11. The accommodating cavity is configured to accommodate the cell 50. The electrical connector 20 is disposed within the housing 10 and is in contact with the bottom wall 11 of the housing 10, thereby allowing the housing 10 to serve as the output electrode of the battery 100.

Specifically, to facilitate connection between the electrical connector 20 and the bottom wall 11 of the housing 10, the battery 100 further includes a first connecting portion 21. The first connecting portion 21 is disposed on a side of the electrical connector 20 that is close to the bottom wall 11, and the first connecting portion 21 is in contact with the bottom wall 11. This arrangement can reduce the size of the electrical connector 20, save space, and improve the space utilization of the housing 10. Additionally, the presence of the first connecting portion 21 facilitates the welding of the electrical connector 20 to the housing 10. During welding, it is only necessary to weld the first connecting portion 21 to the bottom wall 11 of the housing 10, thereby reducing the difficulty of welding. Specifically, to facilitate the injection of electrolyte and the exhaust of the battery 100, the second through hole 201 is formed in the first connecting portion 21.

It should be noted that after the battery 100 is fully assembled, the electrolyte is injected into the interior of the battery 100. In the present application, the second through hole 201 is communicated with the first through hole 111, allowing the electrolyte to enter the interior of the battery 100 through the first through hole 111 and the second through hole 201. When injecting electrolyte into the battery 100, air and other gases may enter the interior of the battery 100 along with the electrolyte. If the injection speed of the electrolyte is too fast, the lighter gases, which flow more slowly than the electrolyte, may easily cause blockages, leading to overflow during the injection process. To address this problem, a side of the first connecting portion 21 that faces away from the bottom wall 11 is provided with a groove 22. The groove 22 is configured to accommodate the electrolyte. When injecting electrolyte into the interior of the battery 100, if the injection speed is too fast and the gases in the electrolyte block the first via hole or the second via hole, some of the electrolyte that has not yet been injected can be temporarily held in the groove 22. Once all the gases have been successfully expelled, the electrolyte in the groove 22 can continue to flow into the interior of the battery 100, immersing the cell 50, thereby preventing overflow.

It should be noted that the arrangement of the groove 22 is not limited, as long as it can accommodate electrolyte. For example, in some embodiments, the electrical connector 20 is provided with a snap-fit hole, and a side of the first connecting portion 21 is provided with the groove 22. The first connecting portion 21 is snapped into the snap-fit hole, such that when snapping, the side of the first connecting portion 21 with the groove 22 faces the cell 50.

In other embodiments, to ensure connection strength, the first connecting portion 21 is integrally formed with the electrical connector 20. Specifically, the electrical connector 20 is placed on a punching machine, and the first connecting portion 21 is stamped on the electrical connector 20 by stamping. By replacing the punching head, the groove 22 is further stamped on the first connecting portion 21. The specific operation manner and precautions of stamping may refer to conventional means in the art, which will not be repeated herein.

To ensure connection strength, in some embodiments, a second connecting portion 23 is provided on the first connecting portion 21 toward the bottom wall 11, and the second connecting portion 23 is snap-fitted into the first through hole 111. The first through hole 111 and the second connecting portion 23 can serve as positioning references for assembling the battery 100. During the installation of the battery 100, the second connecting portion 23 is directly snap-fitted into the first through hole 111, such that the first through hole 111 and the second connecting portion are used as positioning references to assemble the battery 100. This can improve assembly efficiency and prevent misalignment during installation. To ensure that the electrolyte can be smoothly injected, the second through hole 201 is formed in the second connecting portion 23. This arrangement can prevent the second through hole 201 from becoming blocked. Since the second connecting portion 23 is snap-fitted into the first via hole, the second through hole 201 is located within the first through hole 111, ensuring that the second through hole 201 is always communicated with the first through hole 111. If the battery 100 experiences shaking due to external forces during transportation, causing some internal structures to become misaligned, the second through hole 201, being within the first through hole 111, will remain in communication with the first through hole 111 even if the second connector becomes misaligned. This ensures that gases inside the battery 100 can be expelled through the second through hole 201 and the first through hole 111, preventing blockages in the first through hole 111 and the second through hole 201, and avoiding gas retention in the battery 100 that could lead to thermal runaway.

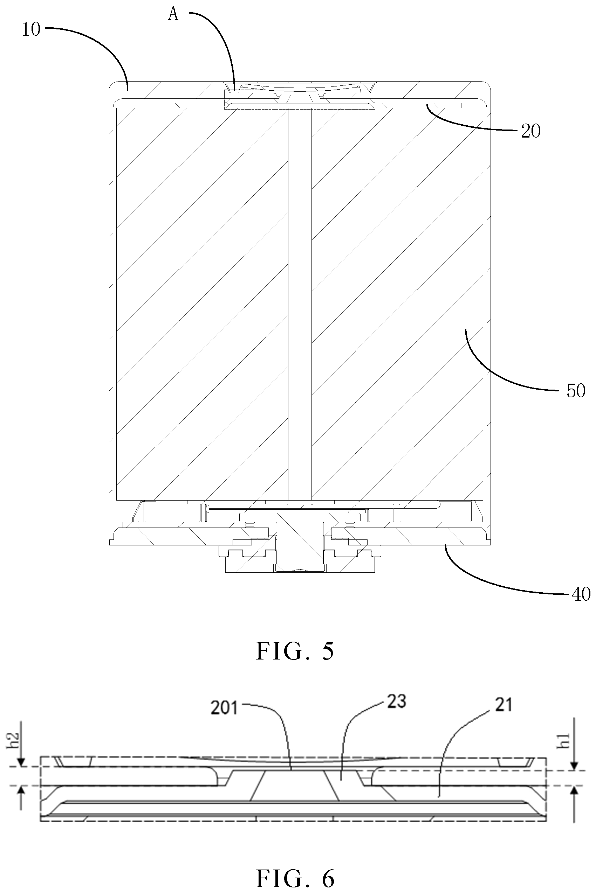

In some embodiments, referring to FIG. 5 and FIG. 6, in the thickness direction of the bottom wall 11, the height of the second connecting portion 23 is represented with h1, and the depth of the first through hole 111 is represented with h2, where h1 ≤ h2. It should be noted that the height of the second connecting portion 23 needs to be less than or equal to the depth of the first through hole 111. This arrangement is necessary because the battery 100 requires an explosion-proof valve 30, which is positioned at the vent hole. When the first through hole 111 and the second through hole 201 serve as vent holes, the explosion-proof valve 30 may correspond to them. If the internal pressure of the battery 100 becomes too high, the gas can be expelled through the first through hole 111 and the second through hole 201, thereby pushing open the explosion-proof valve 30 to prevent thermal runaway of the battery 100. Therefore, if the height of the second connecting portion 23 exceeds the depth of the first through hole 111, the second connecting portion 23 will protrude beyond the first through hole 111 and come into contact with the explosion-proof valve 30. This would increase the structural strength of the explosion-proof valve 30, requiring greater pressure to open it during thermal runaway of the battery 100, thereby exacerbating the thermal runaway condition.

Please refer to FIG. 1 to FIG. 4. In some embodiments, a side of the bottom wall 11 that faces away from the electrical connector 20 is provided with an accommodating groove 112. The first through hole 111 is formed at the bottom of the accommodating groove 112. The battery 100 further includes an explosion-proof valve 30 disposed within the accommodating groove 112. The explosion-proof valve 30 corresponds to the first through hole 111. When the internal pressure of the battery 100 becomes excessive, the gas can be expelled through the first through hole 111 and the second through hole 201, thereby pushing open the explosion-proof valve 30. This allows the gas inside the battery 100 to be discharged smoothly, preventing thermal runaway of the battery 100.

It should be noted that the specific type of explosion-proof valve 30 is not limited and can be selected based on actual requirements.

In some embodiments, the explosion-proof valve 30 includes a rupture disk, which is provided with a score 34. When the internal pressure of the battery 100 becomes excessive, gas is expelled through the first through hole 111 and the second through hole 201, pressing against the rupture disk. The rupture disk will break along the score 34, thereby releasing the pressure from the battery 100 and preventing thermal runaway of the battery 100.

In some embodiments, please refer to FIG. 4. The explosion-proof valve 30 includes a first explosion-proof portion 31 and a second explosion-proof portion 32, which are connected to each other. The first explosion-proof portion 31 is connected to the housing 10, and the second explosion-proof portion 32 is bent in the direction towards the electrical connector 20. The second explosion-proof portion 32 is arranged in a curved configuration, providing it with an arcuate surface. In the event of an anomaly inside the battery 100, such as thermal runaway or a rapid increase in gas production leading to a pressure rise, this arcuate structure can more sensitively detect the pressure, allowing the explosion-proof valve 30 to open and prevent thermal runaway. Additionally, the arcuate surface can reduce the likelihood of external objects colliding with the explosion-proof valve 30. When the protective sheet of the explosion-proof valve 30 is subjected to significant external deformation, the protective sheet has more space to deform. If the protective sheet fails, the likelihood of it contacting the explosion-proof valve 30 is reduced, thereby ensuring the normal function of the explosion-proof valve 30.

It should be noted that the curvature of the arcuate surface of the second explosion-proof portion 32 is not limited, as long as it ensures that the second explosion-proof portion 32 does not come into contact with or press other structures of the blade. The specific curvature can be set according to the valve opening pressure value, which is determined based on actual process requirements and will not be repeated here.

In some embodiments, please continue to refer to FIG. 4. The explosion-proof valve 30 further includes a third explosion-proof portion 33 disposed between the first explosion-proof portion 31 and the second explosion-proof portion 32. The third explosion-proof portion 33 is provided with a score 34, with the opening of the score 34 facing the electrical connector 20. In the event of an anomaly inside the battery 100, such as thermal runaway or a rapid increase in gas production leading to a pressure rise, the second explosion-proof portion 32 can more sensitively detect the pressure. The shear force at the score 34 quickly reaches the critical value, thereby enabling smooth valve opening and preventing excessive internal pressure in the battery 100, which could lead to thermal runaway.

Referring to FIG. 1, the battery 100 further includes a cover plate assembly 40. The cover plate assembly 40 covers the housing 10 and is connected to the cell 50. An insulating component is provided between the cover plate assembly 40 and the housing 10. In the present application, the liquid injection holes of the battery 100 (i.e., the first through hole 111 and the second through hole 201) are located at the bottom of the battery 100, separate from the insulating component. This arrangement can prevent the electrolyte from splashing onto the insulating component during injection, thereby avoiding corrosion of the insulating component.

The present application further provides a battery module, which includes the above-mentioned battery 100. The specific structure of the battery 100 can be referenced from the above embodiments. Since this battery module adopts all the technical solutions of the aforementioned embodiments, it possesses at least all the beneficial effects brought by the technical solutions of the above embodiments, which will not be repeated here.

The present application further provide a battery pack, which includes the above-mentioned battery module. The specific structure of the battery module can be referenced from the above embodiments. Since this battery pack adopts all the technical solutions of the aforementioned embodiments, it possesses at least all the beneficial effects brought by the technical solutions of the above embodiments, which will not be repeated here.

Additionally, the present application further provides an electric device, which includes the above-mentioned battery pack. The specific structure of the battery pack can be referenced from the above embodiments. Since this electric device adopts all the technical solutions of the aforementioned embodiments, it possesses at least all the beneficial effects brought by the technical solutions of the above embodiments, which will not be repeated here.

It can be understood that the electric device includes, but is not limited to, an electric toy, an electric tool, an electric vehicle, an automobile, a ship, a spacecraft, or the like. The electric toy may include a stationary or movable electric toy, such as a game machine, an electric toy car, an electric toy ship, an electric toy airplane, or the like. The spacecraft may include an airplane, a rocket, a space shuttle, a spaceship, or the like. The automobile may be a fuel-powered automobile, a gas-powered automobile, or a new energy automobile.

## Claims

1. A battery (100), comprising:
a housing (10), wherein a bottom wall (11) of the housing (10) is provided with a first through hole (111); and
an electrical connector (20) disposed within the housing (10) and being in contact with the housing (10), wherein the electrical connector (20) is provided with a second through hole (201), and the second through hole (201) is communicated with the first through hole (111) to allow an electrolyte and/or a gas to pass through.

2. The battery (100) according to claim 1, wherein a side of the electrical connector (20) close to the bottom wall (11) is provided with a first connecting portion (21), and the first connecting portion (21) is in contact with the bottom wall (11);
wherein the second through hole (201) is formed in the first connecting portion (21).

3. The battery (100) according to claim 2, wherein a side of the first connecting portion (21) away from the bottom wall (11) is provided with a groove (22), and the groove (22) is configured to accommodate the electrolyte.

4. The battery (100) according to any one of claims 1 to 3, wherein a region of the electrical connector (20) close to a center protrudes toward the bottom wall (11) to form the first connecting portion (21).

5. The battery according to claim 3 or 4, wherein a region of the first connecting portion (21) close to a center protrudes toward the bottom wall (11) to form the groove (22).

6. The battery (100) according to any one of claims 2 to 5, wherein a region of the first connecting portion (21) close to a center protrudes toward the bottom wall (11) to form a second connecting portion (23), and the second connecting portion (23) is snap-fitted into the first through hole (111);
wherein the second through hole (201) is formed in the second connecting portion (23).

7. The battery (100) according to claim 6, wherein in a thickness direction of the bottom wall (11), a height of the second connecting portion (23) is represented with h1, and a height of the first through hole (111) is represented with h2, wherein h1 ≤ h2.

8. The battery (100) according to any one of claims 1 to 7, wherein a side of the bottom wall (11) away from the electrical connector (20) is provided with an accommodating groove (112), and the first through hole (111) is formed at a bottom of the accommodating groove (112).

9. The battery (100) according to claim 8, further comprising an explosion-proof valve (30), wherein the explosion-proof valve (30) is disposed within the accommodating groove (112).

10. The battery (100) according to claim 9, wherein the explosion-proof valve (30) comprises a first explosion-proof portion (31) and a second explosion-proof portion (32) connected to each other, the first explosion-proof portion (31) is connected to the housing (10), and the second explosion-proof portion (32) is configured in a bent manner in a direction close to the electrical connector (20).

11. The battery (100) according to claim 10, wherein the explosion-proof valve (30) further comprises a third explosion-proof portion (33) disposed between the first explosion-proof portion (31) and the second explosion-proof portion (32), the third explosion-proof portion (33) is provided with a score (34), and an opening of the score (34) is disposed facing the electrical connector (20).

12. The battery (100) according to any one of claims 1 to 11, wherein both side surfaces of the electrical connector (20) are each provided with a coating layer.

13. The battery (100) according to claim 12, wherein a thickness of the coating layer ranges from 0.3 µm to 8 µm.

14. A battery module, comprising the battery (100) as claimed in any one of claims 1 to 13.
